# EUROPEAN PATENT SPECIFICATION

(11) **EP 3 302 814 B1**
(45) Date of publication and mention of the grant of the patent: **30.09.2020**
(21) Application number: 16806452.5
(22) Date of filing: 14.06.2016
(51) Int. Cl.: B05B 1/30, B05B 1/34, B05B 15/00, A62C 31/02, B05B 15/65, B25B 27/14, F26B 3/12, F16K 15/02, B05B 15/18

(54) **HIGH-PRESSURE SPRAY NOZZLE ASSEMBLY**
HOCHDRUCKSPRÜHDÜSENANORDNUNG
ENSEMBLE DE BUSE DE PULVÉRISATION HAUTE PRESSION

(30) Priority: 11.06.2015 AU 2015902412
(43) Date of publication of application: 11.04.2018
(60) Divisional application: 19219054.4
(73) Proprietor: Spray Nozzle Engineering Pty Ltd, Mentone, Victoria 3189 (AU)
(72) Inventor: MORGAN, Sean, Mentone, Victoria 3189 (AU); MORGAN, Stuart, Mentone, Victoria 3189 (AU)
(74) Representative: Ruuskanen, Juha-Pekka
(86) International application number: PCT/AU2016/050486
(87) International publication number: WO 2016/197209

(56) References cited:
- CN-U- 202 922 534
- US-A- 3 550 482
- US-A1- 2012 193 455
- US-B2- 8 057 220

## Description

### TECHNICAL FIELD

The invention relates to spray nozzle assemblies, specifically high-pressure spray nozzle assemblies used for spray drying applications.

### BACKGROUND ART

High-pressure spray nozzles used for spray drying have many applications, such as for spray drying of dairy products. Spray nozzles operate under high-pressure - typically 20,6 MPa (3000 psi) or more, and often as much as 34,4 MPa (5000 psi) and up to 68,8 MPa (10000 psi). Spray nozzle assemblies should accordingly be engineered to conform to appropriate agreed technical standards governing high-pressure equipment, such as ASME B31.3.

Existing designs are, however, thought to be non-compliant for various reasons. One root cause is that existing designs dictate various manufacturing tolerances to avoid components jamming axially and radially. Such compromises demanded of existing designs inherently reduce the suitability of such designs for high pressure operation.

The use of non-compliant high-pressure equipment represents a serious safety issue in an industrial setting, as failure of high-pressure equipment may have catastrophic consequences, including fire and explosion risk. Moreover, nozzle assembly failure has implications for plant productivity and product quality control.

Directly linked to safety and productivity concerns, spray nozzle assemblies of this type also have requirements of improved operator usability. The ease of operation in disassembling a spray nozzle and replacing its consumable wear components affects operational usability, efficiency and risk arising from incorrect assembly.

Ideally, spray nozzles should maintain operational safety via compliance with high-pressure equipment standards, along with reliably producing a precise spray pattern for product quality, ready cleanablility, and permit operators to readily replace wear components without damaging the spray nozzle assembly.

An objective of the present invention is to at least partly address these and other limitations of existing designs, or at least provide a useful alternative.
US20120193455A1 discloses a spray nozzle assembly including at least one wear part made from a hard and abrasion-resistant material and a protective housing made from a strong and resilient material and having a downstream chamber adapted to receive one or more of the wear parts in releasably trapped relationship. The downstream chamber has a wall including a post defined by a slot in the downstream chamber wall either side of the post, the post including an inwardly extending protuberance at or near its end and adapted to prevent the wear part from escaping from the downstream chamber.

### SUMMARY OF INVENTION

The present invention, in one aspect, arises from a realization that effective sealing in high-pressure spray nozzle assembles can be advantageously achieved by leveraging applied hydraulic pressure to avoid inherent possibilities of high-pressure failure that are present in some existing designs.

Accordingly, the present inventors have devised a high-pressure spray nozzle assembly having a nozzle body and nozzle cap, which are operatively coupled and co-operatively house a retainer having a clasp for retaining wear components, wherein the nozzle cap has an open-stepped detent which is formed in relief on an internal peripheral surface of the nozzle cap, wherein the open-stepped detent permits sealing of the retainer against the nozzle cap as a consequence of hydraulic pressure applied by fluid delivered through the high-pressure spray nozzle assembly during operation.

The retainer features a retaining seal located upstream of the clasp and disposed around a radial periphery of the retainer. The retaining seal serves to register the retainer within the nozzle cap by interference of the retaining seal with the open-stepped detent.

The retainer is not restricted in an absolutely fixed position by the open stepped detent, and enjoys a limited amount of travel or play along an axial direction of the nozzle cap. The retainer by design responds to applied hydraulic pressure to complete effective sealing via mating internal surfaces of the nozzle cap and the retainer.

Preferably, a front axial orifice seal is positioned on the wear components and becomes further compressed with increasing hydraulic pressure through the assembly, which acts to create a secure mating surface seal between the wear components and the nozzle cap under operating hydraulic pressure.

The retaining seal is preferably larger in section than the front axial orifice seal positioned on the wear components, and is also preferably made of a material that is stiffer and harder than that of the front axial orifice seal. The retaining seal does not provide a high-pressure sealing function itself, but effects registration of the retainer in the nozzle cap, and sealing is completed by applied hydraulic pressure arising via normal operation.

The retainer preferably has a perforated sleeve integral or attached to the clasp, and which protrudes from the nozzle cap when the retainer is registered within. The sleeve has at least one pair of opposed lateral bores formed therein to facilitate extraction of the retainer from the nozzle cap.

The present disclosure in a further aspect, not part of the present invention, comprises a unitary retainer assembly for a high-pressure spray nozzle assembly of the type described herein, the unitary retainer assembly comprising: a retainer having a clasp for releasably trapping wear components, and a sleeve having a radial detent; a check valve assembly comprising a valve seal attached to a valve body having a radial detent; and a helical spring which at one terminal end removably attaches to the radial detent formed on the sleeve of the retainer, and at its opposite terminal end removably attaches to the radial detent formed on the valve body of the check valve.

The check valve assembly is releasably attached to the retainer, wherein the sleeve acts to guide the valve spring in axial alignment with the assembly while the clasp receives and retains the wear components. The retainer integrates a check valve assembly to form the unitary retainer assembly.

The sleeve of the retainer comprises a spring retaining barb locator acting as a detent internally to ensure the valve spring and valve body and seat of the check valve remain attached to each other on removal of the nozzle cap, thereby preventing these parts and the valve spring from being free to fall out and potentially get lost during disassembly of the spray nozzle assembly.

The present disclosure in a yet further aspect, not part of the present invention, provides an extraction tool for use in connection with the high-pressure spray nozzle assembly, for extracting the retainer from the nozzle cap when the retainer is registered within the nozzle cap, the extraction tool comprising a barrel terminating at an upper end in a peripheral collar for seating the nozzle cap so that the retainer depends downwardly into the barrel from the nozzle cap, the barrel having near the collar a pair of channels formed through the peripheral wall of the barrel, the channels being diametrically offset along their extent operatively to permit a pin of a hand tool to pass through respective channels so that the pin moves downwardly as it is rotates along the channels.

A sleeve integral with a retainer that projects beyond the open end of the nozzle cap permits effective use of the extraction tool. A perforated sleeve provides a means by which the retainer can be extracted from the nozzle cap under controlled conditions using a hand tool with the extraction.

### BRIEF DESCRIPTION OF DRAWINGS

**FIGS 1A** **and** **1B** are complementary perspective views - in exploded form - of components of an example high-pressure spray nozzle assembly which features an embodiment of the present invention.
**FIG 1C** are perspective views - in assembled form - of the example high-pressure spray nozzle assembly of **FIGS 1A** and **1B****.**
**FIG 2A** is a cross-sectional view of the high-pressure spray nozzle assembly - in assembled form - depicted in **FIG 1****,** taken through a central axis, together with two accompanying details focussing as indicated on a retaining seal (detail **X,** **FIG 2B**) and also a valve spring (detail **Y,** **FIG 2C**).
**FIG 3** depicts cross-sectional views similar to that of **FIG 2** of different example high-pressure spray nozzle assemblies.
**FIG 4** depicts complementary perspective views of an extraction tool, not part of the present invention, that can be used in conjunction with the high-pressure spray nozzle assembly of **FIG 1** for extracting a retainer from a nozzle cap, and corresponding perspective views of **FIG 5** depict progressive sequential steps involved in removing the retainer from the nozzle cap using a suitable hand tool in conjunction with the extraction tool of **FIG 4****.**

### DESCRIPTION OF EMBODIMENTS

A preferred embodiment of the present invention is described below with reference to the accompanying drawings.

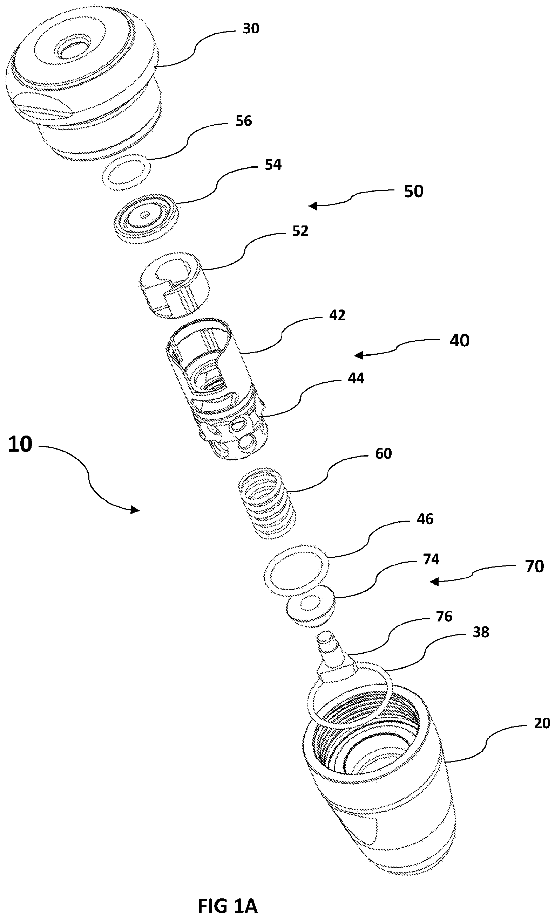

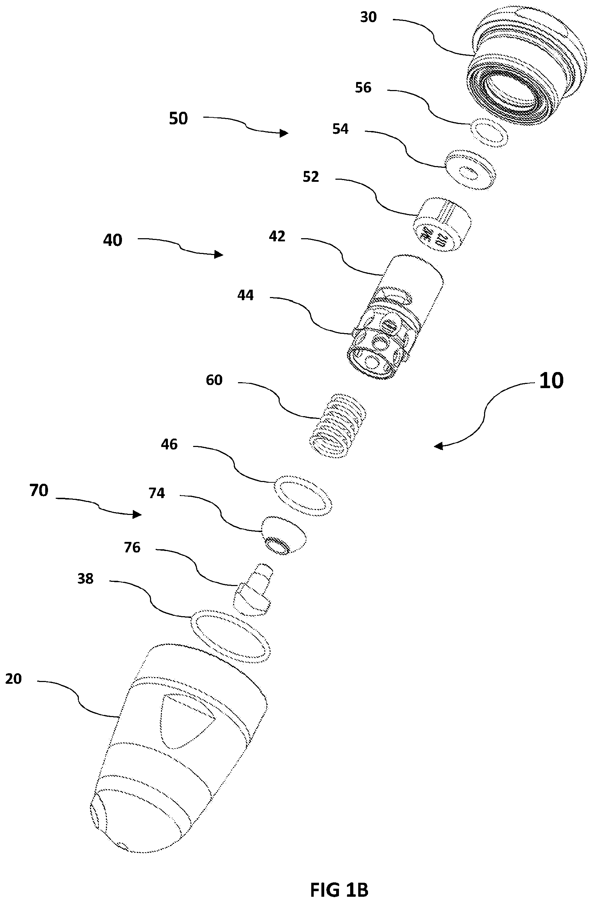

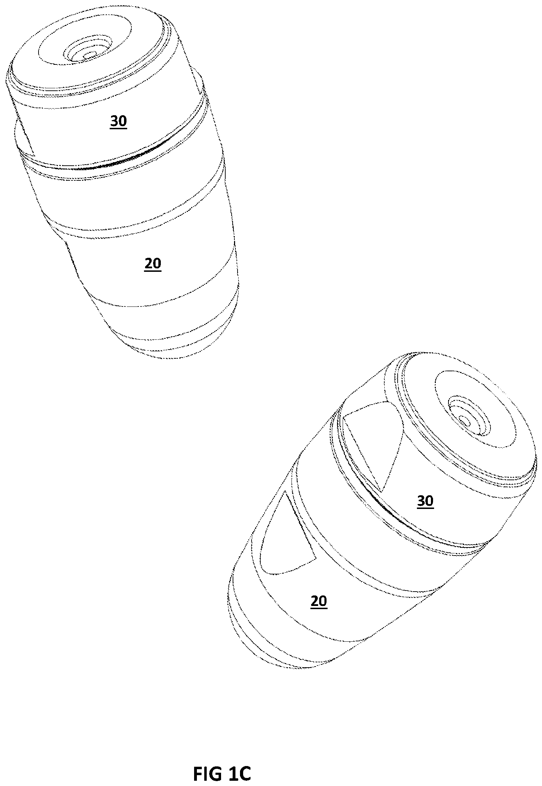

**FIG 1** depicts via various perspective views a high-pressure spray nozzle assembly **10** in exploded form **(****FIGS 1A** and **1B****),** and also assembled form **(****FIGS 1C** and 1D). An earlier generation of this general type of high-pressure spray nozzle assembly in the name of the present applicant is described in United States Patent Nos 9,027,860, and 9,027,861 both of 2015-05-12.

The high-pressure spray nozzle assembly **10** comprises as primary components a nozzle body **20,** a nozzle cap **30,** and a retainer **40.** When assembled, the body **20** and cap **30** co-operatively house the retainer **40,** which is registered in the nozzle body **30.** The nozzle body **20** and nozzle cap **30** are more particularly operatively coupled, via co-operating screw threaded engagement. The nozzle cap **30** features a radial seal located in a groove formed in a peripheral surface of the nozzle cap **30** for effective sealing between the nozzle cap **30** and the nozzle body **20** when the nozzle body **30** is screw threaded onto the nozzle cap **30,** after the retainer **40** has been registered into the nozzle cap **30.** Certain aspects of this general arrangement are further described in US Patent Application No 13/990,708, which is published as US20140048630 A1. Operatively, pressurised fluid is delivered at an upstream end of the assembly **10,** and exits the assembly as an atomised mist at a downstream end of the assembly **10.**

The retainer **40** at one (downstream) end features a clasp **42,** which receives wear components **50** in releasably trapped engagement. The wear components **50** in this case comprise a co-operating swirl chamber **52** capped by an orifice disc **54,** both formed of hard-wearing tungsten carbide. The assembly **10** features at least one pair of co-operating keys and keyways formed in the wear components **50** and clasp **42,** and the co-operating keys and keyways are asymmetrically spaced to force correct orientation of the wear components **50.** Co-operating keys and keyways can be used on the wear components **50** and the clasp **42.** Preferably, the keys and keyways are asymmetrically placed to avoid incorrect insertion. This ensures correct registration and orientation of the wear components **50,** and avoids radial and axial rotation as well as improving the structural integrity of the clasp **42** as the keys effectively form reinforcing members by way of webs on the structure of the clasp **42.** This avoids the operator being able to insert the wear components **50** 'upside down', which would result in a dead end, and hence potential failure of the assembly **10.**

The keys and keyways can be strategically positioned to prevent the swirl chamber **52** from inadvertently being installed upside down, since the multiplicity of registration and the varying spacing between these code the swirl chamber **52** to one mode of installation only, and accordingly the wear components **50** are unable to be installed in an incorrect orientation.

Certain aspects of the general arrangement of the wear components **50** trapped within a retainer **40,** and more particularly the clasp **42** of the retainer **40,** and the associated advantages of such an arrangement, is as described in US Patent Nos 9,027,860 and 9,027,861, referred to above.

The orifice disc **54** has a groove formed therein for receiving an axial seal **56.** The general arrangement of the axial seal **56,** which co-operates with the orifice disc **54** is described in further detail in US Patent Application No 13/378,793 (published as US20120153577 A1).

The retainer **40** also comprises a sleeve **44** integral or at least attached to the clasp **42.** While the clasp **42** receives and retains the wear components **50,** the sleeve fulfils a different role - that of retaining and guiding valve spring **60,** which is attached to check valve assembly **70.** Check valve assembly **70** comprises a valve body **72,** a valve seal **74** and valve guide **76.** The valve seal **74** is secured between the valve body **72** and valve guide **76** by co-operating screw-threaded engagement.

As depicted, the sleeve **44** of the preferred embodiment is segmented into two parts. As is apparent, a wider bore segment of the sleeve **44** is located adjacent the clasp **42,** while a narrower bore segment terminates the sleeve **44** at an upstream end of the retainer **40.** Both segments are generally circular in configuration. Moreover, both segments of the sleeve **44** are perforated, preferably with a pattern of holes having pairs arranged in diametric opposition, as is described in further detail below.

The sleeve **44** is stepped as depicted to catch an opposing shoulder formed on an internal surface of the nozzle body **20.** This acts to prevent any excessive backward movement ('kickback') of the retainer **40** when the assembly **10** becomes operational following pressurisation. As an example, backward movement can be contained to within 0.05mm using this arrangement.

The sleeve **44** retains the valve spring **60,** which is releasably attached in use to the check valve assembly **70,** via a radial detent formed in relief on the valve body 72. The check valve assembly **70** co-operates with the nozzle body **20,** and more particularly its upstream opening to discourage any dripping by operation of the valve seal **74.** The sleeve **44** also collimates the valve spring **60** to ensure that the valve spring **60** is guided in a linearly reciprocating path in alignment with the axial direction of the assembly **10.** The general arrangement of a check valve assembly **70** and valve spring **60** is described in US Patent No 8,596,560.

The arrangement of the preferred embodiment depicted retains the check valve assembly **70** on the retainer **40,** via the valve spring **60,** and the retainer **40** is registered in the nozzle cap **30** until extracted. This has manifold advantages, as will be apparent to those skilled in the art. A unitary retainer assembly, comprising the retainer **40,** valve spring **60** and check valve assembly **70,** can be handled as a single workpiece until disassembly, which avoids loss of components when assembling the high-pressure spray nozzle assembly **10.**

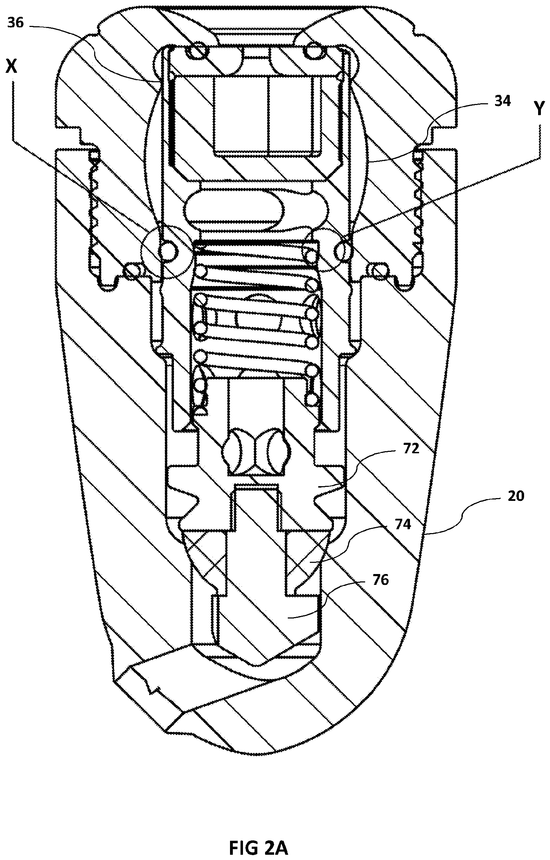

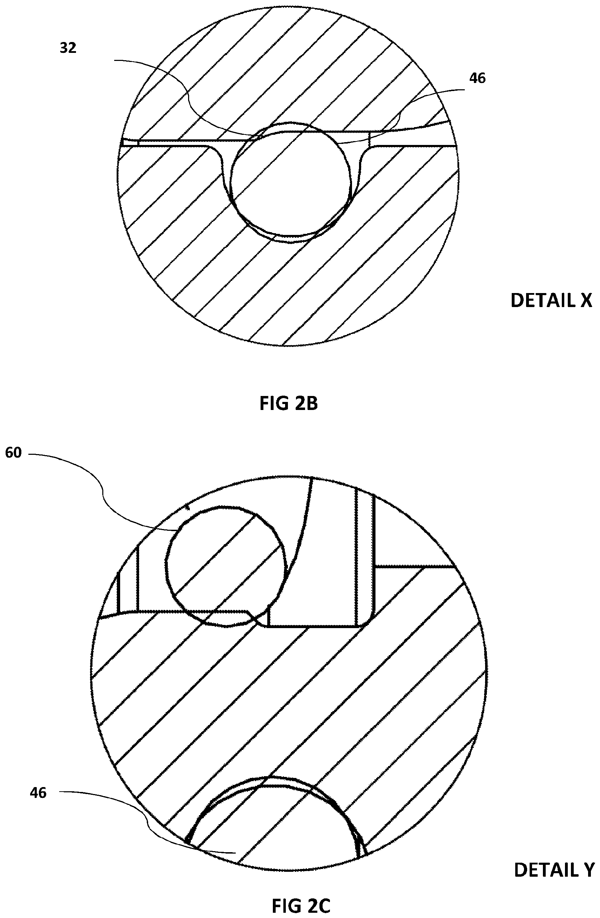

**FIG 2** depicts the embodiment of the assembly **10** of **FIG 1****,** though in sectional and assembled form, with particular details **X** and **Y** indicated in **FIG 2A** exploded as **FIGS 2B** and **2C** respectively.

Detail **X** depicts the relationship between the retaining seal **46** on the retainer **40,** and the nozzle cap **30** and more particularly the open-stepped detent **32,** which is formed as a peripheral shoulder formed in relief on an internal surface of the nozzle cap **30.** The open-stepped detent **32** on the nozzle cap **30** flares open in the region in which the retaining seal **46** is ordinarily located when the retainer **40** is registered in the nozzle cap **30.**

Detail **Y** indicates an inner peripheral corner of the sleeve **44** features a radial detent formed in relief that locates and retains the end of the valve spring **60.** A similar radial detent is provided on the valve body **72,** though on its external surface, so that the valve spring **60** can be removably attached as required to both the retainer **40** and the check valve assembly **70.**

This has the particular advantage that the valve spring **60** (and attached check valve assembly **70**) does not fall out of the sleeve **44** during disassembly of the assembly **10.** Operational environments in which spray nozzles are deployed cannot tolerate disruption which may result from misplaced components, or consequent damage. Furthermore, spray nozzle application are often food-related, which require strict control over hygiene.

The retaining seal **46** is provided in the form of a suitably sized O-ring, matched to the gland formed the retainer **40,** in which the seal **46** is seated. The retaining seal **46** preferably has a higher order duro or hardness rating than that of the axial seal **56.** This means, in effect, that the retaining seal **46** is of a denser material to encourage sealing integrity. The axial seal **56** in operation is thus readily compressed against the inner face of the nozzle cap **30,** to provide surface-to-surface contact between wear components and the nozzle cap **30.** The hardness of the retaining seal **46** contributes to a 'pre-loading' of the retainer **40** within the nozzle cap **30,** which also contributes to the sealing integrity.

The relevant co-operating geometry of the cap **30** and retainer **40** is found to result in a distinct and satisfying 'click' when the retainer **40** is registered in the nozzle cap **30,** thus providing an audible confirmation of correct registration of components. Lack of such auditory confirmation may be indicative of mis-assembly, such as by way of a slipped retaining seal **46.** The open-stepped detent **32** and relief belt **34** also allows for effective access and cleaning, which ensures reliable operation and hygiene.

Referring to **FIG 2B****,** the open stepped detent **32** has a stepped height, which is in the region of an indicative value of 0.2mm in the preferred embodiment. Other heights may be adopted for more or less positive detent action, as may be required in different applications. The open stepped detent **32** has an indicative fillet radius of 1mm, which co-operates with the retaining seal **46,** which has a matching nominal diameter of 2mm in the construction indicated. The start of the open-stepped detent **32** is radiused at 0.5mm to prevent pinching the retaining seal **46.**

The radius of the gland of the retaining seal **46** is slightly larger (say 1.4mm), which permits some limited travel of the retaining seal **46** within the cavity, which creates bias on the downstream side of the open-stepped detent **32.**

The geometry described above, and depicted in **FIG 2B** results in an arrangement in which the total radial gap between the base of the step and the bottom of the gland of the retaining seal **46** is 1.75mm, thus significantly compressing retaining seal **46** by 0.25mm. This is found to provide a positive detent action mitigating axial slip.

Referring back to **FIG 2A** in particular, a relief belt **34** is formed in the internal nozzle cap **30** downstream of the open-stepped detent **32,** and serves to relieve pressure, and also has hygiene advantages owing to ease of cleaning of deposits. The relief profile **34** preferably has a hemispherical profile and shape, though other profiles can be used. The relief belt **34** terminates in a throat **36** which pinches the retainer **40,** and serves to collimate the retainer **40** in the cap **30,** and also to ensure that the wear components **50** are securely held by the clasp **42** of the retainer **40.**

As will be appreciated from the foregoing, the configuration of the open-stepped detent **32** means that bore of the cap **30** opens slightly to a larger diameter to better accommodate the retainer **40.** The open-stepped detent **32** is open in the sense that the geometry of the cap **30** provides no obstruction to applied hydraulic pressure to force the retainer **40** firmly against the cap **30.**

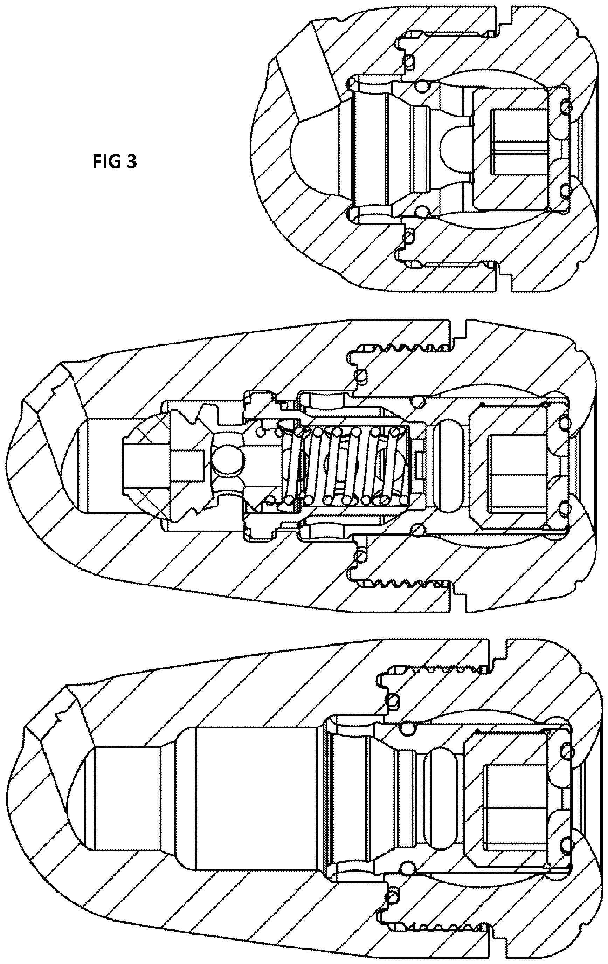

**FIG 3** depict in sectional views similar to **FIG 2A** of different configurations of assemblies which also features a similarly constructed open-stepped detent as well as other corresponding features. As will be appreciated, different assemblies better suit specific applications.

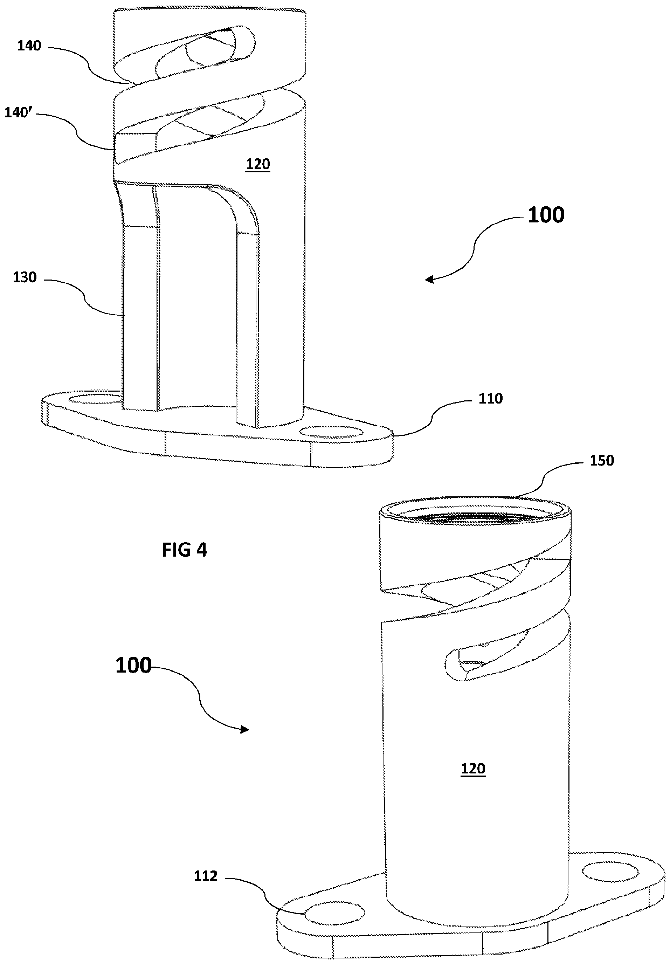

**FIG 4** depicts an extraction tool **100,** not part of the present invention, in complementary perspective views that can be used with the assembly **10** described above in connection with accompanying **FIGS 1** and **2****.**

An extraction tool **100** is advisable as typical use of assembly **10** involves high pressures and temperatures, which can consequently result in gumming and baking of deposits on internal surfaces. As a consequence, using positive controlled force to extract the retainer **40** from the cap **30** separates these components without damage.

Accordingly, the extraction tool **100,** as described below, achieve extraction without direct (uncontrolled) manual contact with the retainer **40,** or indeed the nozzle cap **30.** This avoids damaging the wear components **50** and the nozzle cap **30.**

The extraction tool **100** is used in conjunction with a screwdriver-like hand tool having a simple handle and a pin projecting from the handle, as indicated. A suitable sized handled screwdriver or like to assist extraction of the retainer **40** as a workaround.

A barrel **120** of the tool **100** is attached to a base **110** having a central bore and an opening **130** on one side adjacent the base **110.** The collar **150** is open, and is finished to receive and engage a periphery of the nozzle cap **30** in use - as depicted in **FIGS 8A** to **8C**.

The base **110** preferably has holes **112** formed therein for secure attachment to a workbench, wall or other surface.

The barrel **120** has formed therethrough its peripheral wall a pair of channels **140, 140'** is arranged as depicted an arc around the barrel **120.**

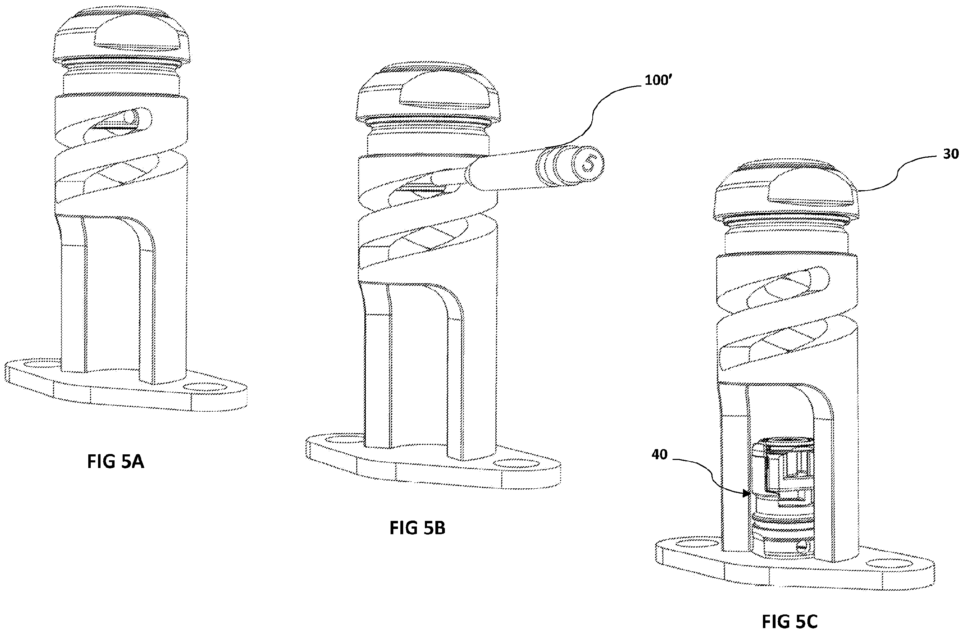

**FIG 5****,** by way of progressive sequential views of **FIGS 5A, 5B** and **5C** convey steps involved in using the extraction tool **100** and the accompanying hand tool **100'.**

Removal of the retainer **40** from the cap **30** is progressively achieved by the steps figuratively depicted in these views.

First, in **FIG 5A****,** the nozzle cap **30** is fitted to the extraction tool **100** by seating the cap **30** on the collar **150.** The retainer **40** is still fitted to the nozzle cap **30,** and is visible in **FIG 5A** through channel **140,** though not especially apparent without closer inspection.

The peripheral profile of the collar **150,** visible in **FIG 4****,** is machined to snugly seat with the corresponding exposed lower profile of the cap **30,** namely its skirt wall and adjacent seal.

With the cap **30** and retainer placed in the tool **100,** the hand tool **100'** can be introduced - as depicted in **FIG 5B****.** The pin of the hand tool **100'** fitted through the opposed channels **140** in the barrel 120 of the hand tool **100',** and also the opposed holes described and depicted in the sleeve **44** of the retainer **40.** The pin of the hand tool **100'** thus securely captures the retainer **40.** The cap **30** can if necessary be rotated manually to achieve proper alignment with the pin as required, preliminary to insertion.

Once registered through the retainer **40** via a passage afforded by the perforations in the sleeve **44,** the pin can be pivoted around and downwardly - following the curvature of the opposed channels **140** formed in the barrel of the tool **100,** this pulling retainer **40** and cap **30** apart in a controlled manner. The hand tool **100'** is then withdrawn, as depicted in **FIG 5C****,** and the retainer **40** is unsupported, and so fall downs the barrel 120 where it can be removed from the tool **100.**

Various modifications of the preferred and alternative embodiments described herein and depicted in the accompanying figures are possible, as would be apparent to a person skilled in the art.

## Claims

1. A high-pressure spray nozzle assembly (10) having a nozzle body (20) and nozzle cap (30), which are operatively coupled and co-operatively house a retainer (40) having a clasp (42) for retaining wear components (50), **characterized in that** the nozzle cap has an open-stepped detent (32) which is formed in relief on an internal peripheral surface of the nozzle cap, wherein the open-stepped detent permits sealing of the retainer (40) against the nozzle cap (30) as a consequence of hydraulic pressure applied by fluid delivered through the high-pressure spray nozzle assembly during operation.

2. The high-pressure spray nozzle assembly according to claim 1, wherein the retainer (40) has a retaining seal (46) which is disposed around a radial periphery of the retainer, and which registers the retainer in the nozzle cap (30) by interference with the open-stepped detent (32).

3. The high-pressure spray nozzle assembly according to claim 1, wherein wear components (50) retained by the clasp (42) are matingly sealed against an internal surface of the nozzle cap (30) during operation.

4. The high-pressure spray nozzle assembly according to claim 1, wherein the nozzle cap has downstream of the open-stepped detent (32) a relief belt (34) formed peripherally around an internal surface of the nozzle cap (30).

5. The high-pressure spray nozzle assembly according to claim 4, wherein the relief belt (34) is shaped to be generally hemispherical in sectional profile to form a void between the nozzle cap (30) and the retainer (40) when registered within the nozzle cap.

6. The high-pressure spray nozzle assembly according to claim 1, wherein the wear components (50) comprise a swirl chamber (52) and an orifice disc (operatively mated and removably trapped by the clasp (42) of the retainer.

7. The high-pressure spray nozzle assembly according to claim 6, wherein co-operating keys and keyways formed on the clasp (42) and wear components (50) are asymmetrically spaced to force correct orientation of the wear components with the clasp.

8. The high-pressure spray nozzle assembly according to claim 1, wherein the retainer (40) has a sleeve (44) which extends beyond an upstream opening of the nozzle cap (30), and having at least one lateral bore formed therein to facilitate extraction of the clasp from the nozzle cap.

9. The high-pressure spray nozzle assembly according to claim 8, wherein the sleeve (44) has a detent for receiving a helical valve spring (60) associated with a check valve (70).

10. The high-pressure spray nozzle assembly according to claim 9, further comprising a check valve (70) releasably attached to the retainer (40), wherein the sleeve (44) acts to guide the valve spring (60) in axial alignment with the assembly.

11. The high-pressure spray nozzle assembly according to claim 1, wherein the nozzle body (20) and nozzle cap (30) are operatively coupled via co-operating screw-threaded engagement in which the nozzle cap is screwed into the nozzle body, and sealing is effected between the nozzle cap and nozzle body via an axial seal (56) in the form of a guarded O-ring gland formed in a peripheral flange of the nozzle cap.

## Patentansprüche

1. Hochdrucksprühdüsenanordnung (10) mit einem Düsenkörper (20) und einer Düsenkappe (30), die wirkgekoppelt sind und zusammenwirkend eine Halterung (40) mit einer Klammer (42) zum Halten von Verschleißbauteilen (50) aufnehmen, **dadurch gekennzeichnet, dass** die Düsenkappe eine offen abgestufte Arretierung (32) aufweist, die als Aussparung an einer Innenumfangsfläche der Düsenkappe ausgebildet ist, wobei die offen abgestufte Arretierung ein Abdichten der Halterung (40) gegen die Düsenkappe (30) infolge eines durch ein während eines Betriebs durch die Hochdrucksprühdüsenanordnung geführtes Fluid aufgebrachten Hydraulikdrucks erlaubt.

2. Hochdrucksprühdüsenanordnung nach Anspruch 1, wobei die Halterung (40) eine Halterungsdichtung (46) aufweist, die um einen radialen Umfang der Halterung angeordnet ist und die die Halterung durch Übermaß mit der offen abgestuften Arretierung (32) in der Düsenkappe (30) einrastet.

3. Hochdrucksprühdüsenanordnung nach Anspruch 1, wobei durch die Klammer (42) gehaltene Verschleißbauteile (50) während eines Betriebs ineinandergreifend gegen eine Innenfläche der Düsenkappe (30) abgedichtet sind.

4. Hochdrucksprühdüsenanordnung nach Anspruch 1, wobei die Düsenkappe stromabwärts der offen abgestuften Arretierung (32) eine umlaufend um eine Innenfläche der Düsenkappe (30) ausgebildete Aussparungszone (34) aufweist.

5. Hochdrucksprühdüsenanordnung nach Anspruch 4, wobei die Aussparungszone (34) derart geformt ist, dass sie ein im Allgemeinen halbkugelförmiges Querschnittsprofil aufweist, um einen Hohlraum zwischen der Düsenkappe (30) und der Halterung (40) auszubilden, wenn diese in der Düsenkappe eingerastet ist.

6. Hochdrucksprühdüsenanordnung nach Anspruch 1, wobei die Verschleißbauteile (50) eine Wirbelkammer (52) und eine Lochplatte umfassen, die in Wirkeingriff mit und entfernbar durch die Klammer (42) der Halterung eingeklemmt ist.

7. Hochdrucksprühdüsenanordnung nach Anspruch 6, wobei zusammenwirkende Passfedern und Keilnuten, die an der Klammer (42) und Verschleißbauteilen (50) ausgebildet sind, asymmetrisch beabstandet sind, um eine korrekte Ausrichtung der Verschleißbauteile mit der Klammer zu erzwingen.

8. Hochdrucksprühdüsenanordnung nach Anspruch 1, wobei die Halterung (40) eine Manschette (44) aufweist, die sich über eine stromaufwärtige Öffnung der Düsenkappe (30) hinaus erstreckt und mindestens eine darin ausgebildete seitliche Bohrung aufweist, um eine Entnahme der Klammer aus der Düsenkappe zu ermöglichen.

9. Hochdrucksprühdüsenanordnung nach Anspruch 8, wobei die Manschette (44) eine Arretierung zum Aufnehmen einer mit einem Rückschlagventil (70) assoziierten Schraubenventilfeder (60) aufweist.

10. Hochdrucksprühdüsenanordnung nach Anspruch 9, ferner umfassend ein Rückschlagventil (70), das lösbar an der Halterung (40) angebracht ist, wobei die Manschette (44) dazu dient, die Ventilfeder (60) in axialer Fluchtung mit der Anordnung zu führen.

11. Hochdrucksprühdüsenanordnung nach Anspruch 1, wobei der Ventilkörper (20) und die Düsenkappe (30) über eine zusammenwirkende Schraubverbindung wirkgekoppelt sind, bei der die Düsenkappe in den Düsenkörper eingeschraubt wird, und wobei eine Abdichtung zwischen der Düsenkappe und dem Düsenkörper über eine Axialdichtung (56) in Form einer geschützten O-Ring-Stopfbuchse bewirkt ist, die in einem umlaufenden Flansch der Düsenkappe ausgebildet ist.

## Revendications

1. Ensemble de buse de pulvérisation haute pression (10) présentant un corps de buse (20) et un capuchon de buse (30), qui sont accouplés de manière opérationnelle et qui reçoivent en coopération un élément de retenue (40) avec un fermoir (42) pour retenir des composants d'usure (50), **caractérisé en ce que** le capuchon de buse présente un ergot à ouverture étagée (32), qui est formé en relief sur une surface périphérique interne du capuchon de buse, l'ergot à ouverture étagée permettant l'étanchéité de l'élément de retenue (40) par rapport au capuchon de buse (30) en conséquence de la pression hydraulique appliquée par le fluide fourni à travers l'ensemble de buse de pulvérisation haute pression pendant le fonctionnement.

2. Ensemble de buse de pulvérisation haute pression selon la revendication 1, dans lequel l'élément de retenue (40) a un joint de retenue (46) qui est disposé autour d'une périphérie radiale de l'élément de retenue, et qui positionne l'élément de retenue dans le capuchon de buse (30) par interférence avec l'ergot à ouverture étagée (32).

3. Ensemble de buse de pulvérisation haute pression selon la revendication 1, dans lequel les composants d'usure (50) retenus par le fermoir (42) sont scellés de manière correspondante contre une surface interne du capuchon de buse (30) pendant le fonctionnement.

4. Ensemble de buse de pulvérisation haute pression selon la revendication 1, dans lequel le capuchon de buse comporte en aval de l'ergot à ouverture étagée (32) une bande de décharge (34) formée de manière périphérique autour d'une surface interne du capuchon de buse (30).

5. Ensemble de buse de pulvérisation haute pression selon la revendication 4, dans lequel la bande de décharge (34) est formée pour être généralement hémisphérique en profil de section afin de former un vide entre le capuchon de buse (30) et l'élément de retenue (40) lorsqu'il est positionné dans le capuchon de buse.

6. Ensemble de buse de pulvérisation haute pression selon la revendication 1, dans lequel les composants d'usure (50) comprennent une chambre de tourbillonnement (52) et un disque à orifice accouplé de manière opérationnelle et piégé de manière amovible par le fermoir (42) de l'élément de retenue.

7. Ensemble de buse de pulvérisation haute pression selon la revendication 6, dans lequel des clés et des rainures de clavettes coopérantes formées sur le fermoir (42) et les composants d'usure (50) sont espacées de manière asymétrique pour forcer l'orientation correcte des composants d'usure avec le fermoir.

8. Ensemble de buse de pulvérisation haute pression selon la revendication 1, dans lequel l'élément de retenue (40) comporte un manchon (44) qui s'étend au-delà d'une ouverture en amont du capuchon de buse (30), et comportant au moins un alésage latéral formé en son sein pour faciliter l'extraction du fermoir depuis le capuchon de buse.

9. Ensemble de buse de pulvérisation haute pression selon la revendication 8, dans lequel le manchon (44) comporte un ergot pour recevoir un ressort de soupape hélicoïdal (60) associé à un clapet anti-retour (70).

10. Ensemble de buse de pulvérisation haute pression selon la revendication 9, comprenant en outre un clapet anti-retour (70) fixé de manière amovible sur l'élément de retenue (40), dans lequel le manchon (44) agit pour guider le ressort de soupape (60) en alignement axial avec l'ensemble.

11. Ensemble de buse de pulvérisation haute pression selon la revendication 1, dans lequel le corps de buse (20) et le capuchon de buse (30) sont accouplés de manière opérationnelle par l'intermédiaire d'un engagement fileté coopérant dans lequel le capuchon de buse est vissé dans le corps de buse, et l'étanchéité est effectuée entre le capuchon de buse et le corps de buse par l'intermédiaire d'un joint axial (56) sous la forme d'un presse-étoupe à joint torique protégé formé dans une bride périphérique du capuchon de buse.
